# EUROPÄISCHE PATENTSCHRIFT

(11) **EP 0 650 042 B1**
(45) Veröffentlichungstag und Bekanntmachung des Hinweises auf die Patenterteilung: **15.04.1998**
(21) Anmeldenummer: 94113083.3
(22) Anmeldetag: 22.08.1994
(51) Int. Cl.: G01M 1/32, G01M 1/04

(54) **Verfahren und Vorrichtung zum Inpositionhalten eines auf einer Messspindel einer Auswuchtmaschine aufgespannten Kraftfahrzeugrades**
Procedure and device for holding in position a vehicle wheel clamped on a measuring shaft of a balancing machine
Procédé et dispositif de maintien en position d'une roue de véhicule serrée sur un axe de mesure d'une machine d'équilibrage

(30) Priorität: 26.10.1993 DE 4336508
(43) Veröffentlichungstag der Anmeldung: 26.04.1995
(73) Patentinhaber: HOFMANN WERKSTATT-TECHNIK GMBH, D-64319 Pfungstadt (DE)
(72) Erfinder: Rothamel, Karl, D-64342 Seeheim-Jugenheim (DE); Lenhardt, Lorenz, D-64347 Griesheim (DE)
(74) Vertreter: Nöth, Heinz, Dipl.-Phys.

(56) Entgegenhaltungen:
- EP-A- 0 550 816
- DE-A- 3 101 843
- DE-A- 4 122 844

## Beschreibung

Die Erfindung betrifft ein Verfahren nach dem Oberbegriff des Patentanspruches 1 und eine Vorrichtung nach dem Oberbegriff des Patentanspruches 3.

Ein derartiges Verfahren und eine derartige Vorrichtung sind aus der DE-A1 41 22 844 bekannt. Hierbei können Ausgleichsebene und Ausgleichsdurchmesser mit Hilfe einer Tasteinrichtung, beispielsweise einer Taststange, abgetastet werden. Die entsprechende Maße werden für die Berechnung der einzusetzenden Ausgleichsgewichte in die Auswerteelektronik der Ausgleichsmaschine eingegeben. Es können dabei die Ausgleichspositionen sowohl in der linken als auch in der rechten Ausgleichsebene abgetastet werden. Mit Hilfe der Tasteinrichtung können dann insbesondere Klebegewichte am Kraftfahrzeugrad nach dem Unwuchtmeßvorgang zum Unwuchtausgleich befestigt werden.

Aus der Hofmann-Betriebsanleitung, Radauswuchtmaschine Geodyna 88/88 m (Impressum 941214509.86 D) ist es bekannt, nach dem Unwuchtmeßvorgang das Rad in die Ausgleichsposition einzudrehen, wobei in der Ausgleichsposition durch einen Bremsimpuls das Rad kurz gebremst wird, so daß das Anhalten des Kraftfahrzeugrades in der Ausgleichsposition erleichtert wird.

Aus der DE-A1 31 01 843 ist es bekannt, beim Eingeben der Geometriedaten des Kraftfahrzeugrades vor dem Unwuchtmeßlauf für die Taststellung eine auf die Auswuchtmaschinenwelle wirkende Bremse vorzusehen.

Aufgabe der Erfindung ist es, das Einsetzen der Gewichte in der Ausgleichsposition zu erleichtern.

Diese Aufgabe wird erfindungsgemäß beim Verfahren durch die Merkmale des Patentanspruches 1 und bei der Vorrichtung durch die Merkmale des Patentanspruches 3 gelöst.

Wenn zwei Ausgleichsgewichte in zwei Ausgleichsebenen eingesetzt werden, können hierzu zwei den Ausgleichsebenen zugeordnete Tasteinrichtungen verwendet werden, wobei beim Betätigen jeder der beiden Tasteinrichtungen separat die Haltebremse aktiviert wird.

In der deutschen Patentanmeldung P 42 29 865 (10,3,94) und der entsprechenden europäischen Patentanmeldung 93 111 992.9 (EP-A1-586 856, 16,3,94) sind Abtasteinrichtungen beschrieben, die sowohl zum Abtasten der Ausgleichsebenen und der Ausgleichsradien als auch zum Einsetzen der Ausgleichsgewichte in die entsprechenden Ausgleichspositionen, welche bei dem Meßvorgang ermittelt wurden, dienen. Derartig ausgebildete Tasteinrichtungen können bei der Erfindung ebenfalls zum Einsatz kommen.

Gekoppelt mit der Betätigung dieser Tasteinrichtung nach dem Eindrehen des Kraftfahrzeugrades in die Ausgleichsebene beim Einsetzen des Ausgleichsgewichts in die Ausgleichsposition wird die Spindel und damit das darauf aufgespannte Kraftfahrzeugrad durch die Haltebremse in der Ausgleichsposition gehalten. Die Aktivierung der Haltebremse geschieht zumindest so lange, bis das Ausgleichsgewicht mit Hilfe der Tasteinrichtung in die Ausgleichsposition gebracht ist. Bevorzugt werden Klebegewichte verwendet.

Die Haltebremse kann beispielsweise dann wieder gelöst werden, wenn die Tasteinrichtung in ihre Ruheposition zurückgebracht ist. Aufgrund der Erfindung ist es nicht mehr erforderlich, durch Betätigen eines .. Pedals oder dergl. die Haltebremse zu aktivieren. Diese wird vielmehr automatisch durch die Betätigung der Tasteinrichtung aktiviert.

Um zu verhindern, daß das Rad auf der Spannvorrichtung rutscht und so die Eindrehposition verfälscht wird, kann beim Eindrehen des Kraftfahrzeugrades in die Ausgleichsposition zuerst eine niedrige Bremswirkung, beispielsweise bei einer Drehgeschwindigkeit von mehr als 20 Umdrehungen pro Minute geschaltet werden und bei Stillstand dann die volle Bremswirkung geschaltet werden.

Zur Betätigung der Haltebremse kann eine Aktivierungseinrichtung vorgesehen sein, die an eine Positionsüberwachungseinrichtung angeschlossen ist, welche dann ein elektrisches Signal vorsieht, wenn das Kraftfahrzeugrad nach dem Unwuchtmeßvorgang in die Ausgleichsposition gedreht worden ist. Ferner ist die Aktivierungseinrichtung an eine Zustandsüberwachungseinrichtung angeschlossen, welche dann ein elektrisches Signal liefert, wenn die Tasteinrichtung aus ihrer Ruheposition bewegt wird. Die Haltebremse wird durch die Aktivierungseinrichtung dann aktiviert, wenn die beiden elektrischen Signale der Positionsüberwachungseinrichtung und der Zustandsüberwachungseinrichtung an die Aktivierungseinrichtung geliefert worden sind.

Anhand der Figuren wird an einem Ausführungsbeispiel die Erfindung noch näher erläutert. Es zeigt:
- Fig. 1:: schematisch ein Ausführungsbeispiel der Erfindung; und
- Fig. 2:: eine Detaildarstellung eines Teils einer beim Ausführungsbeispiel verwendeten Tasteinrichtung.

Beim Ausführungsbeispiel ist eine Meßspindel 1 in Lagern 14, 15 am Rahmen einer Auswuchtmaschine gelagert. Mit Hilfe einer Spanneinrichtung 8 ist auf die Meßspindel ein auszuwuchtendes Kraftfahrzeugrad 2 aufgespannt. Die Spanneinrichtung wird über eine durch die Spindel 1 geführte Zugstange 13 von einer Spannmittelbetätigungseinrichtung 12 betätigt. Aus der EP 0 550 816 A2 ist eine derartige Einrichtung bekannt. Der Antrieb der Spindel 1 erfolgt durch einen Elektromotor 9, dessen Drehmoment über einen Antriebsriemen 10 und eine Riemenscheibe 11 auf die Meßspindel 1 übertragen wird. Ferner ist aus der bekannten Vorrichtung eine Haltebremse 3 bekannt, welche beim Eindrehen des auszuwuchtenden Rotors 2 in die Ausgleichswinkellage durch einen kurzzeitigen Bremsimpuls betätigt und somit als Eindrehhilfe verwendet wird.

Bei dem dargestellten Ausführungsbeispiel dient die Haltebremse 3 ferner zum bequemeren Einsetzen von Ausgleichsgewichten, insbesondere Klebegewichten, an der bzw. den während des Meßvorgangs bestimmten Ausgleichspositionen des auszuwuchtenden Kraftfahrzeugrades. Hierzu besitzt das Ausführungsbeispiel eine Tasteinrichtung 6, welche, wie es aus der DE 41 22 844 Al bekannt ist, zur Abtastung der linken Ausgleichsebene und des Ausgleichsradius dient. Ferner kann zum Abtasten der rechten Ausgleichsebene und des zugeordneten Ausgleichsradius am Kraftfahrzeugrad 2 eine zweite Tasteinrichtung vorgesehen sein. Diese kann beispielsweise so ausgebildet sein, wie es in der deutschen Patentanmeldung 43 30 287.4 (EP-A2,3-642007,8,3,95) beschrieben ist.

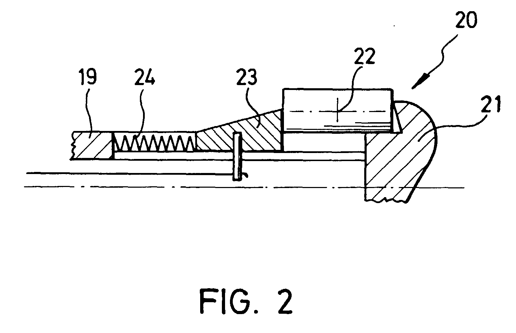

Beide Tasteinrichtungen können an ihren vorderen Enden so ausgebildet sein, daß sie ein Ausgleichsgewicht halten können, wie es in Fig. 2 dargestellt ist und wie es in der europäischen Patentanmeldung 93 111 992.9 bzw. der entsprechenden deutschen Patentanmeldung P 42 29 865.2 beschrieben ist.

Wie die Fig. 2 zeigt, besitzt das vordere Ende 20 einer teleskopierbaren Taststange 19 der Tasteinrichtung 6 ein Tastelement 21 zum Abtasten möglicher Ausgleichstellen am Kraftfahrzeugrad 2. Das Tastelement 21 dient beim Einsetzen eines Ausgleichsgewichtes 22 gleichzeitig als Klemmteil der in Fig. 2 dargestellten Haltevorrichtung. Ein von einer Druckfeder 24 beaufschlagtes zweites Klemmteil 23 drückt das Ausgleichsgewicht 22 beim Einsetzen gegen das Tastelement 21. Nach Durchführung des Meßvorgangs, während welchem mit Hilfe einer nicht näher dargestellten Auswerteelektronik die Ausgleichsstellen am Kraftfahrzeugrad 2 ermittelt wurden, werden mit Hilfe der Tasteinrichtung 6 und der in Fig. 2 dargestellten Haltevorrichtung am vorderen Ende 20 der teleskopierbaren Taststange 19 die Ausgleichsgewichte, welche insbesondere als Klebegewichte ausgebildet sind, an den entsprechenden Ausgleichspositionen eingesetzt.

Um diesen Vorgang zu erleichtern, wird mit Hilfe der Haltebremse 3 die in den Lagern 14 und 15 am Maschinenrahmen gelagerte Spindel 1 und das darauf aufgespannte Kraftfahrzeugrad 2 angehalten.

Zur Aktivierung der Haltebremse 3 ist eine Bremsenaktivierungseinrichtung 7 vorgesehen. Diese wird zum einen angesteuert von einer Positionsüberwachungseinrichtung 4, welche die Winkelposition der Meßspindel 1 feststellt. Hierzu ist die Positionsüberwachungseinrichtung 4 mit einer Abtasteinrichtung 26 verbunden, die einen mit der Meßspindel 1 umlaufenden und in bekannter Weise z.B. als Lochscheibe ausgebildeten Winkelschrittgeber, der nicht dargestellt ist, abtastet. Von der Auswerteelektronik wird das Ende des Meßvorgangs gemeldet und die Winkelposition bzw. die Winkelpositionen in den beiden Ausgleichsebenen der Positionsüberwachungseinrichtung 4 gemeldet. Sobald beim Eindrehvorgang die Spindel 1 und das darauf aufgespannte Kraftfahrzeugrad 2 eine Ausgleichswinkellage erreicht haben, liefert die Winkelposition 4 an die Bremsenaktivierungseinrichtung 7 ein Signal, durch das angezeigt wird, daß das Kraftfahrzeugrad 2 sich in der Ausgleichsposition befindet.

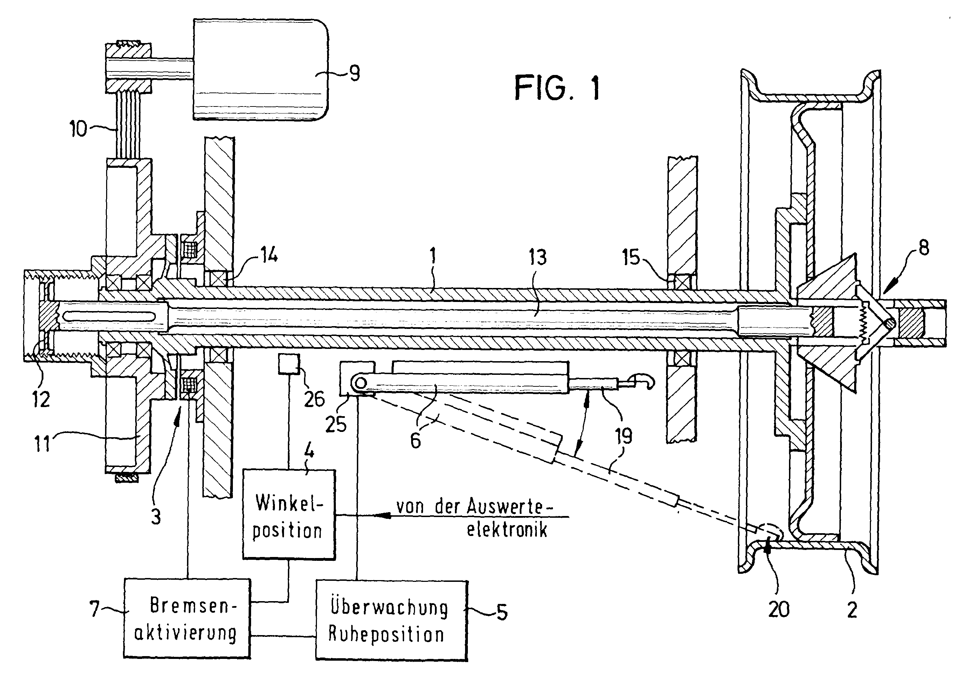

Ferner ist eine Einrichtung zur Überwachung der Ruheposition der Tasteinrichtung 6 in Form einer Zustandsüberwachungseinrichtung 5 vorgesehen. Wenn die Zustandsüberwachungseinrichtung 5 mit Hilfe einer Abtasteinrichtung 25 feststellt, daß die Tasteinrichtung 6 aus der in der Fig. 1 hindurchgezogenen Linien dargestellte Ruheposition bewegt wird, sendet sie ein Signal zur Bremsenaktivierungseinrichtung 7. Wenn sowohl das Signal der Positionsüberwachungseinrichtung 4 als auch das Signal der Zustandsüberwachungseinrichtung 5 in der Bremsenaktivierungseinrichtung vorliegen, aktiviert diese die Haltebremse 3, so daß während des Einsetzvorganges des Gewichtes 22 an der entsprechenden Ausgleichsposition die Spindel 1 und das Kraftfahrzeugrad 2 festgehalten werden. Der gleiche Vorgang wiederholt sich im Zusammenhang mit der nicht näher dargestellten Tasteinrichtung zum Einsetzen des Ausgleichsgewichtes in der rechten Ausgleichsebene. Wenn die jeweiligen Ausgleichsgewichte am Rad 2 befestigt sind und die Tasteinrichtung 6 in ihre Ruheposition zurückgebracht ist, wird die Haltebremse 3 wieder gelöst. Dies kann durch ein entsprechendes Signal der Überwachungseinrichtung 5 erfolgen.

## Patentansprüche

1. Verfahren zum Inpositionhalten eines auf einer Meßspindel (1) einer Auswuchtmaschine aufgespannten Kraftfahrzeugrades (2) in seiner Ausgleichsposition nach dem Unwuchtmeßvorgang für das Befestigen eines Ausgleichsgewichtes in der jeweiligen Ausgleichsposition, wobei das Ausgleichsgewicht mit Hilfe einer Tasteinrichtung (6) am Kraftfahrzeugrad befestigt wird, dadurch gekennzeichnet, daß nach dem Eindrehen des Kraftfahrzeugrades in die Ausgleichsposition beim Bewegen der Tasteinrichtung aus ihrer Ruheposition eine Haltebremse (3) zum Anhalten der Meßspindel aktiviert wird.

2. Verfahren nach Anspruch 1, dadurch gekennzeichnet, daß zum Einsetzen von Ausgleichsgewichten in zwei Ausgleichsebenen zwei zugeordnete Tasteinrichtungen verwendet werden und daß beim Betätigen jeder der beiden Tasteinrichtungen separat die Haltebremse aktiviert wird.

3. Vorrichtung zum Inpositionhalten eines auf einer Meßspindel einer Auswuchtmaschine aufgespannten Kraftfahrzeugrades (2), mit einer Haltebremse (3) für die Meßspindel (1) und einer Tasteinrichtung (6) zum Heranführen eines Ausgleichsgewichtes an die Ausgleichsposition, dadurch gekennzeichnet, daß eine Positionsüberwachungseinrichtung (4) vorgesehen ist, welche ein elektrisches Signal vorsieht, wenn das Kraftfahrzeugrad (2) nach dem Unwuchtmeßvorgang in die Ausgleichsposition gedreht ist, daß eine Zustandsüberwachungseinrichtung (5) vorgesehen ist, welche ein elektrisches Signal liefert, wenn die Tasteinrichtung (6) aus ihrer Ruheposition bewegt ist, daß eine Aktivierungseinrichtung (7) an die Positionsüberwachungseinrichtung (4) und die Zustandsüberwachungseinrichtung (5) angeschlossen ist und daß die Haltebremse (3) durch die Aktivierungseinrichtung (7) aktiviert ist, wenn die beiden elektrischen Signale der Positionsüberwachungseinrichtung (4) und der Zustandsüberwachungseinrichtung (5) an die Aktivierungseinrichtung (7) geliefert sind.

## Claims

1. A method of holding a motor vehicle wheel (2) which is clamped on a measuring spindle (1) of a balancing machine in its balancing position after the unbalance measuring operation for fixing a balancing weight at the respective balancing position, wherein the balancing weight is fixed to the vehicle wheel by means of a sensing device (6), characterised in that after the motor vehicle wheel has been turned into the balancing position when the sensing device is moved out of its rest position a holding brake (3) is activated to stop the measuring spindle.

2. A method according to claim 1 characterised in that two associated sensing devices are used for fitting balancing weights in two balancing planes and that the holding brake is activated separately upon actuation of each of the two sensing devices.

3. Apparatus for holding a motor vehicle wheel (2) which is clamped on a measuring spindle of a balancing wheel in position, comprising a holding brake (3) for the measuring spindle (1) and a sensing device (6) for moving a balancing weight to the balancing position, characterised in that there is provided a position monitoring device (4) which provides an electrical signal when the motor vehicle wheel (2) is turned into the balancing position after the unbalance measuring operation, that there is provided a condition monitoring device (5) which supplies an electrical signal when the sensing device (6) is moved out of its rest position, that an activating device (7) is connected to the position monitoring device (4) and the condition monitoring device (5), and that the holding brake (3) is activated by the activating device (7) when the two electrical signals of the position monitoring device (4) and the condition monitoring device (5) are supplied to the activating device (7).

## Revendications

1. Procédé pour maintenir en sa position d'équilibre une roue (2) de véhicule automobile bloquée sur une broche (1) de mesure d'une machine d'équilibrage du balourd, après l'opération de mesure du balourd afin de fixer une masselotte d'équilibrage en la position d'équilibre associée, la masselotte d'équilibrage étant fixée à la roue du véhicule automobile à l'aide d'un dispositif (6) de détection, caractérisé en ce que, après que la roue du véhicule automobile soit venue en tournant à la position d'équilibre, un frein (3) de maintien est, si le dispositif de détection quitte sa position de repos, activé pour maintenir la broche de mesure.

2. Procédé suivant la revendication 1, caractérisé en ce que, pour introduire des masselottes d'équilibrage dans deux plans d'équilibrage, on utilise deux dispositifs de détection associés et en ce que l'on active séparément le frein de maintien lors de l'actionnement de chacun des deux dispositifs de détection.

3. Dispositif pour maintenir en position une roue (2) de véhicule automobile bloquée sur une broche de mesure d'une machine d'équilibrage du balourd, comportant un frein (3) de maintien pour la broche (3) de mesure et un dispositif (6) de détection pour amener une masselotte d'équilibrage à la position d'équilibrage, caractérisé en ce qu'il est prévu un dispositif (4) de surveillance de la position, qui prévoit un signal électrique si la roue (2) du véhicule automobile est amenée en tournant à la position d'équilibrage après l'opération de mesure du balourd, en ce qu'il est prévu un dispositif (5) de surveillance d'état, qui fournit un signal électrique si le dispositif (6) de détection est déplacé de sa position de repos, en ce qu'un dispositif (7) d'activation est raccordé au dispositif (4) de surveillance de la position et au dispositif (5) de surveillance d'état et en ce que le frein (3) de maintien est activé par le dispositif (7) d'activation si les deux signaux électriques du dispositif (4) de surveillance de la position et du dispositif (5) de surveillance d'état sont fournis au dispositif (7) d'activation.
